# FASCICULE DE BREVET EUROPEEN

(11) **EP 2 628 992 B1**
(45) Date de publication et mention de la délivrance du brevet: **05.06.2019**
(21) Numéro de dépôt: 13154542.8
(22) Date de dépôt: 08.02.2013
(51) Int. Cl.: F16M 11/38, A63B 63/00, E05D 11/10

(54) **Ensemble d'articulation et ensemble à bras articulés comportant au moins un tel ensemble d'articulation**
Gelenkanordnung und Gelenkarmanordnung, die mindestens eine solche Gelenkanordnung umfasst
Joint assembly and articulated-arm assembly comprising at least one such joint assembly

(30) Priorité: 14.02.2012 FR 1251347
(43) Date de publication de la demande: 21.08.2013
(73) Titulaire: Provost, Jean-Claude, 44400 Reze (FR)
(72) Inventeur: Herbert, Franck, 44840 Les Sorinieres (FR); Provost, Jean-Claude, 44400 Reze (FR)
(74) Mandataire: Cabinet Chaillot

(56) Documents cités:
- EP-A1- 0 206 859
- US-A- 5 539 957
- US-A1- 2003 181 267
- US-A1- 2007 281 805

## Description

La présente invention a pour objet un ensemble d'articulation permettant d'articuler au moins un bras mobile autour d'un bras fixe dans un plan perpendiculaire à la ligne longitudinale moyenne du bras fixe et de venir positionner ledit bras mobile de façon sûre dans une position angulaire choisie parmi plusieurs positions angulaires prédéterminées.

Un tel ensemble permet de réaliser des ensembles à bras articulés qui trouvent utilisation par exemple comme ossatures de dispositifs pour la pratique d'un sport, tels que cages de buts de sports collectifs, filets de tennis, de badminton, tables de ping-pong, ou d'éléments de mobilier tels que piétements de tables de camping, meubles de jardin. Les bras sont avantageusement télescopiques et démontables. Ces ossatures recevront alors tous les éléments complémentaires pour constituer l'objet final : panneaux, rigides ou souples, filets, bras supplémentaires, tous accessoires permettant de transformer un article en un autre.

La présente invention a pour but de proposer des ensembles à bras articulés présentant une très grande facilité de pliage afin de constituer des ensembles pliés peu encombrants pour le transport et le stockage, une grande facilité de déploiement et d'installation en position d'utilisation, et une solidité à toute épreuve des parties articulées qui les composent.

Les Déposants ont donc recherché un nouveau type d'articulation permettant un positionnement à différents angles prédéfinis d'au moins un bras, dit bras mobile, autour d'un bras, dit bras fixe, pour atteindre les objectifs précités et en même temps pour offrir de nombreuses possibilités de réalisation des ensembles à bras articulés, permettant, le cas échéant avec emploi d'accessoires, de passer d'une activité à une autre, et de réaliser, à titre d'exemple, des trousses à outils pour le sport, le camping et les loisirs.

Des structures articulées, par exemple telles que divulguées dans EP 0 206 859, et notamment pour la pratique de sports sont décrites dans WO93/01866, WO01/43839 A1, US 5539957, US 2004/0036222A1, US 5863265, FR-A1-2621491, CA 2168297, mais aucun de ces documents ne possède tous les avantages offerts par la présente invention.

A cet effet, la présente invention a donc d'abord pour objet un ensemble d'articulation permettant d'articuler au moins un bras dit bras mobile autour d'un bras dit bras fixe dans un plan perpendiculaire à la ligne longitudinale moyenne du bras fixe et de venir positionner ledit bras mobile de façon sûre dans une position angulaire choisie parmi plusieurs positions angulaires prédéterminées, comportant :
- un corps d'articulation solidaire ou apte à être rendu solidaire du bras fixe et comportant au moins une partie faisant saillie à partir dudit bras fixe et délimitée par une paroi externe semi-cylindrique d'axe parallèle à la ligne moyenne du bras fixe en position de montage du corps d'articulation sur celui-ci, un perçage étant pratiqué selon l'axe de ladite paroi semi-cylindrique pour la réception d'un axe de pivotement et des zones en creux étant formées radialement sur ladite paroi semi-cylindrique, lesquelles correspondent auxdites positions angulaires prédéterminées ; et
- un embout solidaire ou apte à être rendu solidaire d'un bras mobile à une extrémité de celui-ci, comportant des pattes aptes à venir se positionner de part et d'autre d'une saillie du bras fixe et comportant chacune un orifice se plaçant en position de montage en regard du perçage de ladite saillie pour le passage dudit axe de pivotement, ledit embout comportant également au moins un logement recevant un élément de type ressort monté pour repousser un organe de blocage dans une zone en creux correspondant à une position angulaire afin d'assurer le blocage du bras mobile dans cette position, ledit organe de blocage comportant une surface externe lui permettant de rouler sur la paroi semi-cylindrique de ladite saillie entre les zones en creux lors du basculement exercé par l'opérateur sur le bras mobile pour le faire passer d'une position angulaire à une position angulaire voisine, passage au cours duquel le ou les éléments de type ressort se rétractent avant de reprendre leur position de blocage repoussant l'élément de blocage dans la zone en creux voisine caractérisé par le fait que :
- le corps d'articulation (2) est en forme de plaquette parallélépipédique se terminant à au moins une extrémité par une partie en saillie dont la surface semi-cylindrique (6a ; 6b) porte les zones en creux (8A-9A-10A ; 8B-9B-10B) de réception de l'organe de blocage du bras mobile associé, le bras fixe comportant deux pattes (22a ; 22b) destinées à venir se placer chacune de part et d'autre de la plaquette entre les deux parties d'extrémité en saillie et à y être fixées, et
- l'embout (4A ; 4B) d'un bras mobile est de forme cylindrique, comportant le long de sa bordure deux échancrures en U (23a ; 23b) ménageant les deux pattes (24a, 24b ; 24'a, 24'b) d'articulation dudit embout (4A; 4B), et le bras fixe présente une partie creuse cylindrique traversée par le corps d'articulation (2) à une extrémité de celui-ci ou dans une position située le long de celui-ci, la partie creuse cylindrique dudit bras fixe formant, dans sa région traversée par le corps d'articulation (2), deux pattes ou ailes (20a; 20b) venant se placer de part et d'autre de celui-ci et comportant des moyens de fixation à celui-ci, lesdites pattes ou ailes (20a ; 20b) étant formées par des échancrures (17a; 17b) du bras fixe permettant la réception du ou des bras mobiles dans leurs positions extrêmes rabattues contre ledit bras fixe.

Chaque paroi semi-cylindrique peut comporter au moins trois zones en creux.

Les positions des trois zones en creux peuvent être choisies pour permettre au bras mobile de prendre, sur 180°, les positions à 0°, à 90° et à 180°. On peut également par exemple prévoir cinq zones en creux correspondant aux positions à 0°, à 45°, à 90°, à 135° et à 180°.

Les zones en creux peuvent consister en gorges à profil semi-circulaire disposées avec leurs lignes longitudinales moyennes parallèles à l'axe de la saillie, et l'organe de blocage de l'embout associé peut présenter une surface externe de roulement qui est cylindrique.

L'embout d'un bras mobile peut comporter trois logements superposés, les deux logements d'extrémité recevant chacun un ressort hélicoïdal, le logement central recevant un organe de blocage constitué par un élément cylindrique qui est traversé par une tige dont les régions d'extrémité viennent en appui contre les extrémités des ressorts en place dans leurs logements et dont la surface externe est la surface de roulement contre la paroi semi-cylindrique associée de la saillie du corps d'articulation et vient coopérer avec le fond d'une gorge.

Le bras fixe peut comporter une pièce constituant une section de bras agencée pour être fixée au corps d'articulation et/ou chaque bras mobile peut présenter une pièce formant l'embout d'extrémité agencé pour coopérer avec le corps d'articulation, chacune de ces pièces présentant des moyens de liaison avec le reste du bras qui lui est associé soit directement, soit par l'intermédiaire d'un manchon de liaison ou de raccordement.

La présente invention a également pour objet un ensemble à bras articulés, apte à être déployé et replié, comportant au moins un ensemble d'articulation tel que défini ci-dessus, le bras fixe et les bras mobiles, pouvant chacun être télescopique, faisant partie dudit ensemble à bras articulés, ledit ensemble à bras articulés pouvant constituer l'ossature d'un dispositif pliable et dépliable, le cas échéant transformable en un autre dispositif, l'ossature pouvant comporter des bras supplémentaires et toutes pièces accessoires pour composer ledit dispositif, utile par exemple pour la pratique d'un sport ou pour les loisirs, comme cages de buts, filets de tennis et de badminton, tables de tennis de table, tables de camping, meubles de jardin, paravents.

L'ensemble à bras articulés peut comporter quatre ensembles d'articulation, lesquels sont disposés aux angles d'une partie d'ossature formant un rectangle.

Pour mieux illustrer l'objet de la présente invention, on va en décrire ci-après, à titre indicatif et non limitatif, plusieurs modes de réalisation particuliers, avec référence au dessin annexé.
- la Figure 1 est une vue en perspective éclatée d'un ensemble d'articulation à un bras fixe et à deux bras mobiles dans un plan perpendiculaire à l'axe du bras fixe, conformément à un premier mode de réalisation de la présente invention ;
- la Figure 2 est une vue en perspective de l'ensemble d'articulation de la Figure 1, à l'état monté, dans la position dans laquelle les deux bras mobiles se situent avec leurs axes confondus, dans le prolongement l'un de l'autre ;
- les Figures 3, 4 et 5 sont des vues respectivement de face, de côté et de dessous de l'ensemble d'articulation représenté sur la Figure 2 ;
- la Figure 6 est une vue en coupe selon VI-VI de la Figure 3 ;
- la Figure 7 est une vue en coupe selon VII-VII de la Figure 5 ;
- la Figure 8 est une vue en perspective de l'ensemble d'articulation de la Figure 1, à l'état monté, dans la position dans laquelle les deux bras mobiles se situent avec leurs axes perpendiculaires entre eux ;
- les Figures 9 et 10 sont des vues respectivement de face et de dessus de l'ensemble d'articulation représenté sur la Figure 8 ;
- la Figure 11 est une vue de côté de l'ensemble d'articulation de la Figure 8 après que l'on ait fait pivoter celui-ci de 90° vers le bas autour de l'axe du bras mobile se trouvant à droite sur la Figure 8 ;
- la Figure 12 est une vue en coupe selon XII-XII de la Figure 9 ;
- la Figure 13 est une vue en coupe selon XIII-XIII de la Figure 11 ;
- la Figure 14 est une vue en perspective de l'ensemble d'articulation de la Figure 1, à l'état monté, dans la position dans laquelle les deux bras mobiles se situent avec leurs axes parallèles entre eux, en étant orientés suivant des directions opposées ;
- la Figure 15 est une vue de côté de l'ensemble d'articulation représenté sur la Figure 14 ;
- la Figure 16 est une vue en coupe selon XVI-XVI de la Figure 15 ;
- la Figure 17 est une vue de dessus de l'ensemble d'articulation représenté sur la Figure 14 ;
- la Figure 18 est une vue en coupe selon XVIII-XVIII de la Figure 17 ;
- la Figure 19 est une vue en perspective de l'ensemble d'articulation de la Figure 1, à l'état monté, dans la position dans laquelle les deux bras mobiles se situent avec leurs axes parallèles entre eux en étant orientés du même côté ;
- la Figure 20 est une vue de face de l'ensemble d'articulation représenté sur la Figure 19 ;
- la Figure 21 est une vue en coupe selon XXI-XXI de la Figure 20 ;
- la Figure 22 est une vue de côté de l'ensemble d'articulation représenté sur la Figure 19 ;
- la Figure 23 est une vue en coupe selon XXIII-XXIII de la Figure 22 ;
- la Figure 24 est une vue analogue à la Figure 2 d'un ensemble d'articulation à un bras fixe et à deux bras mobiles dans un plan perpendiculaire à l'axe du bras fixe, conformément à un second mode de réalisation de la présente invention ;
- la Figure 25 est une vue de face de l'ensemble de la Figure 24 ;
- les Figures 26 et 27 sont des vues en coupe respectivement selon XXVI-XXVI et XXVII-XXVII de la Figure 25 ;
- la Figure 28 est une vue schématique en perspective d'une cage de but pliable comportant quatre ensembles d'articulation conformes au premier mode de réalisation de l'invention ;
- la Figure 28A montre, en perspective, la cage de but de la Figure 28 en position de pliage ; et
- les Figures 29, 30 et 31 sont des vues en perspective respectivement d'un filet de tennis pliable, d'un filet de badminton pliable et d'une table de jeu de ping-pong comportant chacun quatre ensembles d'articulation selon le premier mode de réalisation de l'ensemble d'articulation selon l'invention.

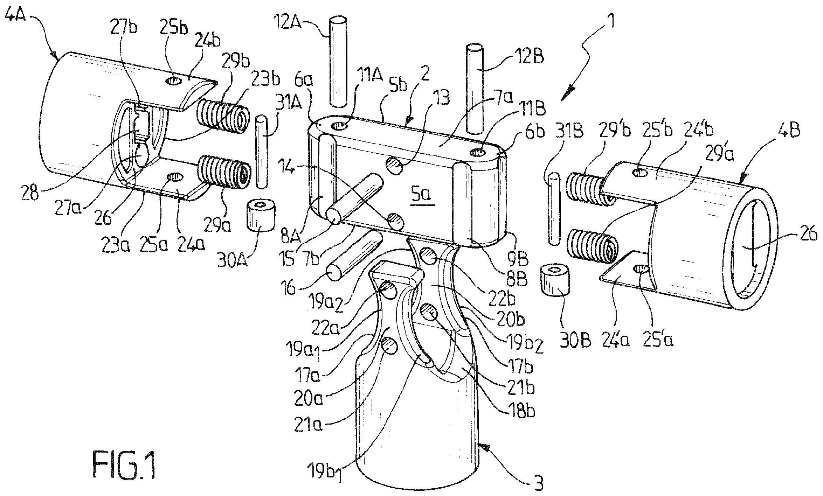

Si l'on se réfère à la Figure 1, on peut voir que l'on a désigné par 1 un ensemble d'articulation conforme à un premier mode de réalisation de la présente invention.

L'ensemble d'articulation 1 comporte un corps central d'articulation 2 au centre duquel un premier bras est apte à venir se fixer et à chacune des extrémités duquel un bras mobile est apte à venir s'articuler en pouvant prendre trois positions comme on va le décrire dans ce qui suit.

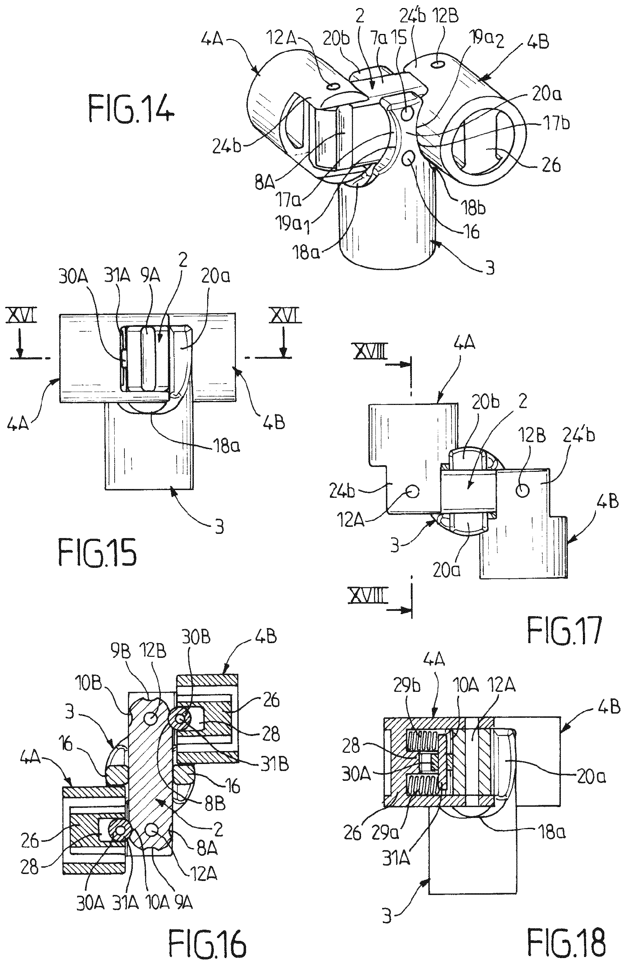

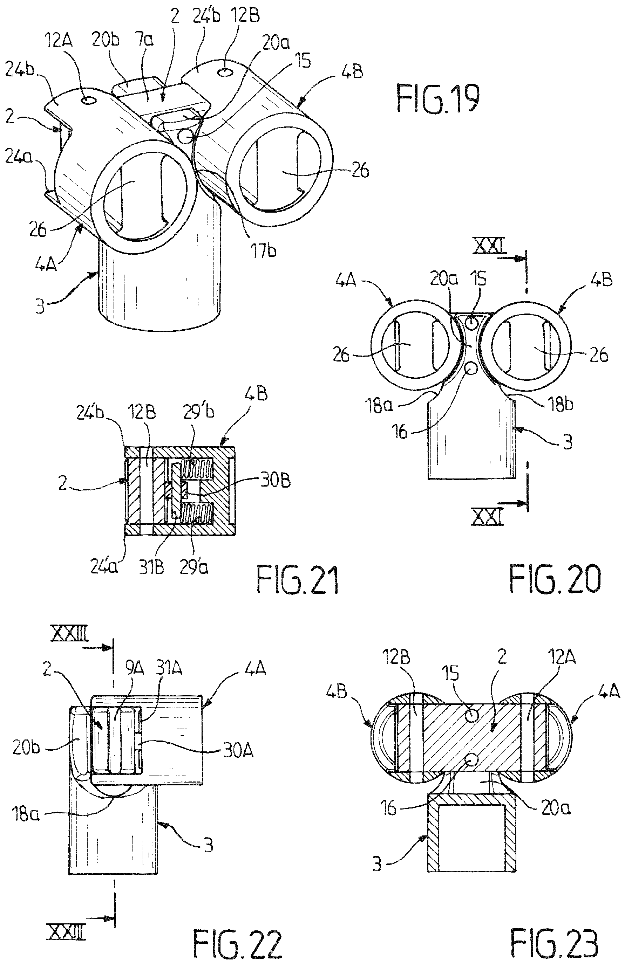

Sur les Figures 1 à 23, n'ont été montrées que la pièce d'extrémité 3 du bras fixe et les pièces d'extrémité 4A, 4B des deux bras mobiles. Ces pièces 3 et 4A, 4B constituent en fait des embouts destinés à venir coopérer avec les extrémités des bras soit directement, soit par l'intermédiaire de pièces ou manchons de raccordement, également non représentées.

Le corps central 2 peut être réalisé en un métal, par exemple en aluminium ou par moulage en une matière plastique, par exemple en polyoxyméthylène homopolymère (POM) ou en polyoxyméthylène polyacétal. Les embouts 3, 4A, 4B peuvent être réalisés par moulage en une matière plastique, telle que celles que l'on vient de mentionner.

Le corps central 2 consiste en un élément dont la forme générale est celle d'un parallélépipède rectangle plat, délimité, si l'on regarde la Figure 1, par deux grandes faces latérales plates en regard 5a, 5b, deux petites faces latérales en regard, arrondies en demi-cylindre 6a, 6b et deux petites faces de dessus et de dessous, respectivement 7a, 7b.

Trois gorges 8A, 9A, 10A, de profil en arc de cercle, sont pratiquées dans la face d'extrémité 6a, perpendiculairement aux faces 7a, 7b, et débouchant dans chacune de celles-ci, les deux gorges 8A, 10A étant situées à la jonction des faces respectivement 5a et 6a, et 6a et 5b, et la gorge 9A étant située entre les deux gorges 8A et 10A, de telle sorte que la gorge 9A se situe dans le plan longitudinal moyen du corps 2 et que les deux gorges 8A, 10A sont décalées de 90° de part et d'autre de la gorge 9A.

Trois gorges 8B, 9B, 10B sont pratiquées de façon symétrique dans la face d'extrémité 6b.

Un perçage cylindrique 11A est pratiqué dans le corps central 2, débouchant dans les faces 7a et 7b, dans le plan contenant le fond des gorges 8A, 10A, à mi-distance entre celles-ci.

Un perçage cylindrique 11B est pratiqué de façon symétrique dans le plan des gorges 8B, 10B, à mi-distance entre celles-ci.

Les perçages 11A, 11B sont destinés à recevoir des goupilles cylindriques respectivement 12A, 12B.

Des perçages cylindriques transversaux 13, 14 sont pratiqués dans le plan transversal moyen du corps central 2, débouchant dans les faces 5a et 5b, l'un au voisinage de la face 7a, l'autre, au voisinage de la face 7b.

Ces perçages 13, 14 sont destinés à recevoir des goupilles cylindriques respectivement 15 et 16.

Dans l'exemple représenté, les bordures délimitant les faces 7a et 7b sont chanfreinées.

L'embout 3 consiste en un élément tubulaire dans la bordure supérieure duquel sont pratiquées deux échancrures profondes opposées respectivement 17a, 17b, délimitées par un fond semi-circulaire respectivement 18a, 18b et par deux bordures latérales opposées 19a₁, 19a₂, 19b₁, 19b₂, de forme concave, permettant de constituer deux pattes d'extrémité opposées respectivement 20a, 20b en forme de diabolo, chacune présentant deux perçages transversaux respectivement 21a, 21b et 22a, 22b.

En position de montage, les pattes 20a, 20b viennent se positionner de part et d'autre du corps central 2 contre les faces respectivement 5a, 5b de celui-ci, les perçages 14, 21a et 21b étant mis en regard pour permettre le passage de la goupille 16 que l'on vient fixer, et les perçages 13, 22a et 22b étant mis en regard pour permettre le passage de la goupille 15 que l'on vient également fixer afin de solidariser l'embout 3 et le corps d'articulation 2.

L'embout cylindrique 4A consiste en un élément tubulaire dans l'une des bordures duquel sont pratiquées deux échancrures en U en regard 23a, 23b délimitées par deux bordures latérales selon l'axe de l'embout 4A et par un fond en arc de cercle, permettant de constituer deux pattes d'extrémité opposées 24a, 24b, chacune présentant un perçage transversal central respectivement 25a, 25b.

En position de montage, les pattes 24a, 24b, dont les faces internes sont plates, viennent se positionner de part et d'autre du corps central 2, contre les faces respectivement 7a, 7b, les perçages 11A, 25a et 25b étant mis en regard pour le montage de la goupille 12A en tant qu'axe de pivotement.

L'embout 4A présente par ailleurs, dans sa partie cylindrique, une paroi interne diamétrale 26, perpendiculaire aux pattes 24a, 24b, cette paroi affleurant la bordure circulaire de la partie cylindrique de l'embout 4A dans la région portant les pattes 24a, 24b et s'arrêtant au voisinage de sa bordure opposée.

Dans cette paroi diamétrale 26, qui est relativement épaisse, sont pratiqués deux logements cylindriques 27a, 27b, le premier, au voisinage de la patte 24a, et le second, au voisinage de la patte 24b, d'axe parallèle à l'axe de l'embout 4A et débouchant du côté des pattes 24a, 24b, ainsi qu'un logement central 28 formé par l'espace entre les deux logements cylindriques 27a, 27b, de moindre profondeur que ceux-ci et communiquant avec eux le long des deux arêtes voisines respectives des logements 27a, 27b.

Les logements 27a, 27b servent à recevoir chacun un ressort hélicoïdal respectivement 29a, 29b, et le logement 28, un petit cylindre, appelé aussi bille 30A, traversé par une tige 31A en position de montage. La bille 30A a une surface cylindrique extérieure lui permettant de tomber dans une gorge successivement 8A, 9A, 10A, comme cela sera décrit ci-après.

La tige 31A vient se placer à l'entrée des logements 27a, 27b et 28, perpendiculairement aux axes des ressorts hélicoïdaux 29a, 29b, contre leurs extrémités opposées à celles appliquées contre le fond des logements 27a, 27b. Bien qu'elle ne soit pas fixée à ses deux extrémités, la tige 31A assure en position de montage un bon maintien de la bille centrale 30A qui a la possibilité de tourner autour de celle-ci.

Les ressorts 29a, 29b sont montés pour repousser la bille 30A et sa tige associée 31A, la bille 30A faisant saillie hors du logement 28.

L'embout 4B est identique à l'embout 4A et, comme on peut le voir sur la Figure 1, il est disposé dans une position symétrique par rapport au corps d'articulation 2. Les pattes inférieure et supérieure de l'embout 4B, destinées à venir se placer respectivement contre les parois 7a et 7b du corps d'articulation 2 ont été désignées par respectivement 24'a et 24'b, les trous de passage de l'axe d'articulation 12B étant désignés par respectivement 25'a et 25'b. Les ressorts associés à l'embout 4B ont été désignés par respectivement 29'a et 29'b et la bille et sa tige, respectivement par 30B et 31B.

Les tiges 31A et 31B peuvent être réalisées en métal, et les billes 30a, 30B en une matière plastique.

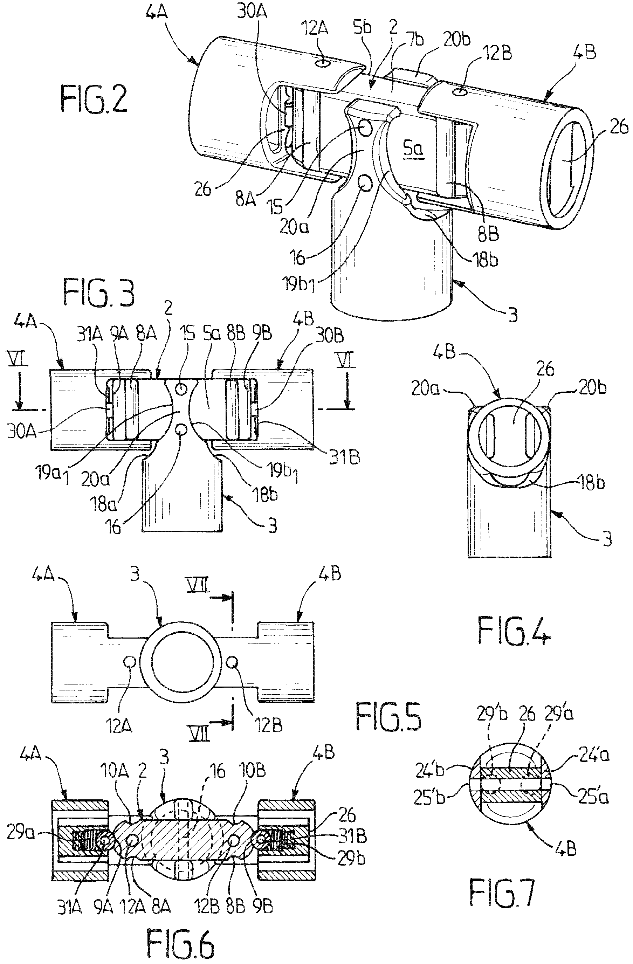

En position de montage, comme on peut le voir par exemple sur la Figure 2, l'embout 3 est fixé sur le corps d'articulation 2 et les embouts 4A et 4B sont montés articulés autour des axes respectivement 12A et 12B sur le corps d'articulation 2.

Les billes 30A et 30B sont repoussées par les ressorts respectivement 29a, 29b, et 29'a, 29'b chacune dans l'une des trois gorges en regard du corps d'articulation 2, soit les gorges 9A et 9B si l'on regarde la Figure 1, les axes des embouts 4A et 4B se trouvant alors dans le prolongement l'un de l'autre.

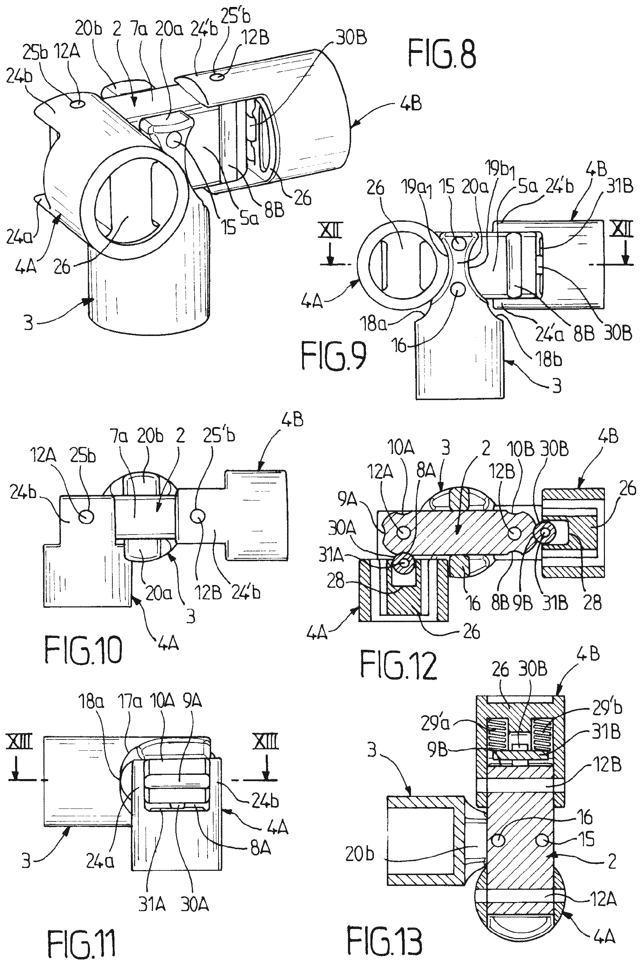

Si l'on fait pivoter l'embout 4A de 90° pour le placer dans la position de la Figure 8, la bille 9A viendra « rouler » sur la face extérieure de la partie d'extrémité semi-cylindrique correspondante du corps d'articulation 2, les ressorts 29a, 29b étant comprimés lors de ce mouvement, jusqu'à venir tomber dans la gorge 8A dans laquelle ils la repoussent pour la bloquer.

On voit donc que l'on peut faire pivoter les embouts 4A, 4B pour occuper les positions des Figures 2 (billes 30A, 30B dans gorges respectivement 9A, 9B) ; 8 (billes 30A, 30B dans gorges respectivement 8A, 9B) ; 14 (billes 30A, 30B dans gorges respectivement 10A, 8B) et 19 (billes 30A, 30B dans gorges respectivement 8A, 8B). Les ressorts sont comprimés lors de ces pivotements, et les billes roulent sur les parois semi-cylindriques entre deux gorges successives.

Le montage décrit ressorts-bille-tige assure un maintien stable et sûr dans les positions choisies et un passage en douceur d'une position d'un bras mobile dans une autre sans usure des billes et de la paroi semi-cylindrique des parties d'extrémité du corps d'articulation 2.

Les échancrures de l'embout 3 formant les pattes 20a, 20b permettent de recevoir les parties cylindriques des embouts respectivement 4A et 4B dans les positions rabattues de ceux-ci, comme on peut les voir sur les Figures 8, 14 et 19.

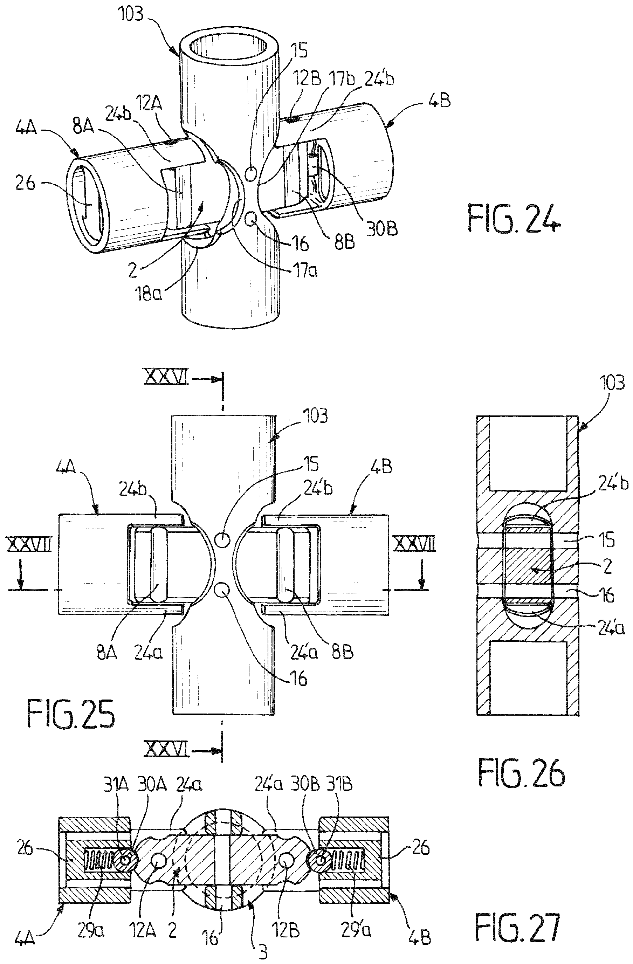

Si l'on se réfère aux Figures 24 à 27, on peut voir que l'on a représenté un second mode de réalisation de l'ensemble d'articulation selon l'invention qui diffère du premier mode de réalisation par le fait que l'embout 103 se prolonge au-delà des pattes 20a, 20b pour constituer une pièce symétrique par rapport au plan transversal passant entre les perçages 20a/20b et 21a/21b pour la fixation de l'embout 103 au corps d'articulation 2 par les goupilles 16 et 15.

Ceci montre que l'on pourra réaliser des ensembles à bras articulés le long d'un bras fixe et non pas seulement avec des articulations d'extrémité ou d'angle comme illustré par le premier mode de réalisation.

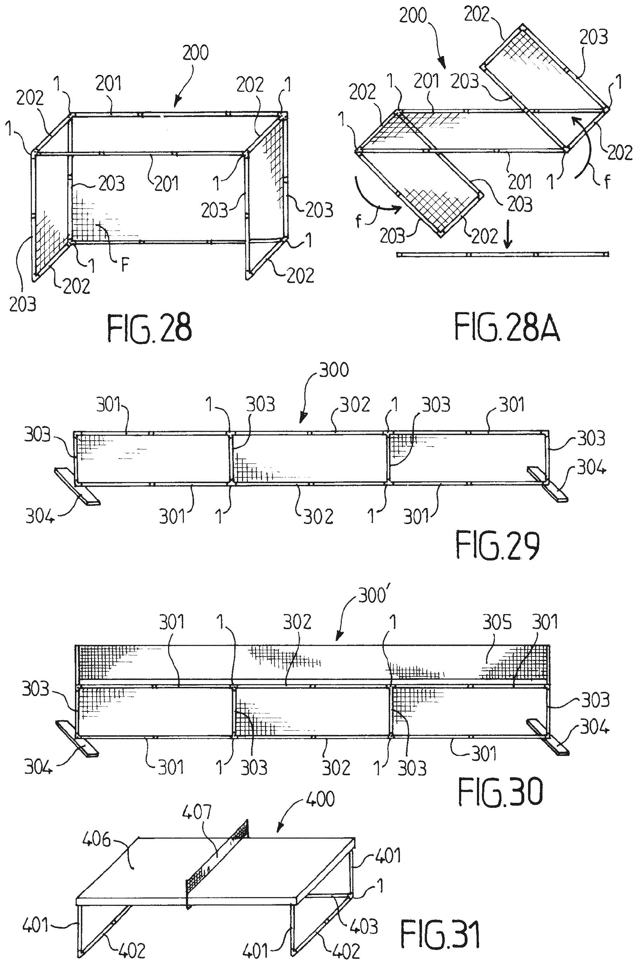

Si l'on se réfère maintenant aux Figures 28, 28A et 29 à 31, on peut voir que l'on a représenté de façon schématique des ensembles à bras articulés réalisés avec des ensembles 1 tels que décrits avec référence aux Figures 1 à 23.

La Figure 28 montre la réalisation d'une ossature de cage de but 200 comportant six ensembles 1, soit quatre ensembles 1 aux quatre angles d'un rectangle délimitant le toit de la cage, et deux ensembles 1 délimitant avec deux des quatre ensembles précédents le fond de la cage. On peut noter que ces deux derniers pourraient ici être des pièces d'angle non articulées.

Les bras horizontaux longitudinaux, les bras horizontaux transversaux et les bras verticaux en position de montage sont désignés respectivement par 201, 202 et 203. Ces bras sont avantageusement télescopiques. Le bras horizontal inférieur en position de montage est un élément rapporté démontable comme on peut le voir sur la Figure 28 sur laquelle les flèches f illustrent les sens du repli du reste de la cage pour son transport. Les deux bras transversaux d'extrémité sont également des éléments rapportés.

Des filets F viennent fermer les panneaux de fond, de toit et latéraux de la cage.

Sur la Figure 29, on a représenté un filet de tennis 300 en position déployée, constitué de trois panneaux fermés par un filet, le panneau central comportant à ses quatre angles des ensembles 1 selon l'invention, et étant délimité par deux bras horizontaux 302 et deux bras verticaux 303, les troisièmes bras 301 qui leur sont associés délimitant les panneaux d'extrémité fermés par des bras verticaux d'extrémité 303 qui sont deux éléments rapportés de même que les pieds 304. Le pliage s'effectue de la même façon que sur la Figure 28A.

La Figure 30 montre un filet de badminton obtenu par ajout d'un filet supérieur 305 au filet de la Figure 29.

La Figure 31 illustre que l'on peut réaliser une table 400 avec trois panneaux tels que ceux représentés sur la Figure 28, formés par les bras 401, 402 et 403 articulés aux quatre ensembles 1, le bras inférieur 403 étant un élément rapporté, de même que le dessus 406. Un filet transversal 407 pourra compléter cette table pour en faire une table de tennis de table.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

## Revendications

1. Ensemble d'articulation (1) permettant d'articuler au moins un bras dit bras mobile autour d'un bras dit bras fixe dans un plan perpendiculaire à la ligne longitudinale moyenne du bras fixe et de venir positionner ledit bras mobile de façon sûre dans une position angulaire choisie parmi plusieurs positions angulaires prédéterminées, comportant :
- un corps d'articulation (2) solidaire ou apte à être rendu solidaire du bras fixe et comportant au moins une partie faisant saillie à partir dudit bras fixe et délimitée par une paroi externe semi-cylindrique (6a ; 6b) d'axe parallèle à la ligne moyenne du bras fixe en position de montage du corps d'articulation (2) sur celui-ci, un perçage (11A; 11B) étant pratiqué selon l'axe de ladite paroi semi-cylindrique (6a ; 6b) pour la réception d'un axe de pivotement (12A ; 12B) et des zones en creux (8A-9A-10A ; 8B-9B-10B) étant formées radialement sur ladite paroi semi-cylindrique, lesquelles correspondent auxdites positions angulaires prédéterminées ; et
- un embout (4A ; 4B) solidaire ou apte à être rendu solidaire d'un bras mobile à une extrémité de celui-ci, comportant des pattes (24a-24b ; 24'a-24'b) aptes à venir se positionner de part et d'autre d'une saillie du bras fixe et comportant chacune un orifice (25a-25b ; 25'a-25'b) se plaçant en position de montage en regard du perçage (11A ; 11B) de ladite saillie pour le passage dudit axe de pivotement (12A; 12B), ledit embout (4A ; 4B) comportant également au moins un logement (27a ; 27b) recevant un élément de type ressort (29a-29b ; 29'a-29'b) monté pour repousser un organe de blocage dans une zone en creux (8A-9A-10A ; 8B-9B-10B) correspondant à une position angulaire afin d'assurer le blocage du bras mobile dans cette position, ledit organe de blocage comportant une surface externe lui permettant de rouler sur la paroi semi-cylindrique de ladite saillie entre les zones en creux (8A-9A-10A ; 8B-9B-10B) lors du basculement exercé par l'opérateur sur le bras mobile pour le faire passer d'une position angulaire à une position angulaire voisine, passage au cours duquel le ou les éléments de type ressort (29a-29b ; 29'a-29'b) se rétractent avant de reprendre leur position de blocage repoussant l'élément de blocage dans la zone en creux voisine,
- le corps d'articulation (2) étant en forme de plaquette parallélépipédique et possédant à ses extrémités deux parties en saillie, ledit corps d'articulation (2) en forme de plaquette parallélépipédique se terminant à au moins une extrémité par une partie en saillie dont la surface semi-cylindrique (6a ; 6b) porte les zones en creux (8A-9A-10A ; 8B-9B-10B) de réception de l'organe de blocage du bras mobile associé, le bras fixe comportant deux pattes (22a ; 22b) destinées à venir se placer chacune de part et d'autre de la plaquette entre les deux parties d'extrémité en saillie et à y être fixées, et
**caractérisé par le fait que**:
- l'embout (4A ; 4B) d'un bras mobile est de forme cylindrique, comportant le long de sa bordure deux échancrures en U (23a ; 23b) ménageant les deux pattes (24a, 24b; 24'a, 24'b) d'articulation dudit embout (4A; 4B), et le bras fixe présente une partie creuse cylindrique traversée par le corps d'articulation (2) à une extrémité de celui-ci ou dans une position située le long de celui-ci, la partie creuse cylindrique dudit bras fixe formant, dans sa région traversée par le corps d'articulation (2), deux pattes ou ailes (20a ; 20b) venant se placer de part et d'autre de celui-ci et comportant des moyens de fixation à celui-ci, lesdites pattes ou ailes (20a ; 20b) étant formées par des échancrures (17a; 17b) du bras fixe permettant la réception du ou des bras mobiles dans leurs positions extrêmes rabattues contre ledit bras fixe.

2. Ensemble d'articulation selon la revendication 1, **caractérisé par le fait que** chaque paroi semi-cylindrique comporte au moins trois zones en creux (8A-9A-10A ; 8B-9B-10B).

3. Ensemble d'articulation selon la revendication 2, **caractérisé par le fait que** les positions des trois zones en creux (8A-9A-10A ; 8B-9B-10B) sont choisies pour permettre au bras mobile de prendre, sur 180°, les positions à 0°, à 90° et à 180°.

4. Ensemble d'articulation selon l'une des revendications 1 à 3, **caractérisé par le fait que** les zones en creux (8A-9A-10A ; 8B-9B-10B) consistent en gorges à profil semi-circulaire disposées avec leurs lignes longitudinales moyennes parallèles à l'axe de la saillie, et **par le fait que** l'organe de blocage de l'embout (4A ; 4B) associé présente une surface externe de roulement qui est cylindrique.

5. Ensemble selon la revendication 4, **caractérisé par le fait que** l'embout (4A ; 4B) d'un bras mobile comporte trois logements (27a-28-27b) superposés, les deux logements d'extrémité (27a-27b) recevant chacun un ressort hélicoïdal (29a, 29b; 29'a, 29'b), le logement central (28) recevant un organe de blocage constitué par un élément cylindrique (30A ; 30B) qui est traversé par une tige (31A ; 31B) dont les régions d'extrémité viennent en appui contre les extrémités des ressorts (29a, 29b ; 29'a, 29'b) en place dans leurs logements (27a, 27b) et dont la surface externe est la surface de roulement contre la paroi semi-cylindrique (6a ; 6b) associée de la saillie du corps d'articulation (2) et vient coopérer avec le fond d'une gorge (8A-9A-10A ; 8B-9B-10B).

6. Ensemble d'articulation selon l'une des revendications 1 à 5, **caractérisé par le fait que** le bras fixe comporte une pièce (3 ; 103) constituant une section de bras agencée pour être fixée au corps d'articulation (2) et/ou que chaque bras mobile présente une pièce (4A ; 4B) formant l'embout d'extrémité agencé pour coopérer avec le corps d'articulation (2), chacune de ces pièces (3 ; 103 ; 4A ; 4B) présentant des moyens de liaison avec le reste du bras qui lui est associé soit directement, soit par l'intermédiaire d'un manchon de liaison ou de raccordement.

7. Ensemble à bras articulés, apte à être déployé et replié, comportant au moins un ensemble d'articulation (1) tel que défini à l'une des revendications 1 à 6, le bras fixe et les bras mobiles, pouvant chacun être télescopique, faisant partie dudit ensemble à bras articulés, ledit ensemble à bras articulés pouvant constituer l'ossature d'un dispositif pliable et dépliable, le cas échéant transformable en un autre dispositif, l'ossature pouvant comporter des bras supplémentaires et toutes pièces accessoires pour composer ledit dispositif, utile par exemple pour la pratique d'un sport ou pour les loisirs, comme cages de buts, filets de tennis et de badminton, tables de tennis de table, tables de camping, meubles de jardin, paravents.

8. Ensemble à bras articulés selon la revendication 7, **caractérisé par le fait qu'**il comporte quatre ensembles d'articulation (1), lesquels sont disposés aux angles d'une partie d'ossature formant un rectangle.

## Patentansprüche

1. Gelenkanordnung (1), die ermöglicht, mindestens einen Arm, bezeichnet als beweglichen Arm, um einen Arm, bezeichnet als festen Arm, auf einer senkrechten Ebene zur mittleren Längslinie des festen Arms zu gelenkig zu drehen und den beweglichen Arm auf sichere Weise in einer Winkelposition zu positionieren, ausgewählt aus mehreren vorbestimmten Winkelpositionen, umfassend:
- einen Gelenkkörper (2), der fest mit dem festen Arm verbunden ist oder ausgelegt ist, mit diesem fest verbunden zu werden, und umfassend mindestens einen Teil, der von dem festen Arm vorspringt und von einer halbzylindrischen äußeren Wand (6a, 6b) mit paralleler Achse zur mittleren Linie des festen Arms in Montageposition des Gelenkkörpers (2) auf diesem begrenzt ist, wobei eine Bohrung (11A; 11B) gemäß der Achse der halbzylindrischen Wand (6a, 6b) zur Aufnahme einer Schwenkachse (12A, 12B) angebracht ist, und wobei hohle Zonen (8A-9A-10A; 8B-9B-10B) radial auf der halbzylindrischen Wand gebildet sind, die den vorbestimmten Winkelpositionen entsprechen; und
- einen Aufsatz (4A; 4B), der mit einem beweglichen Arm an einem Ende desselben fest verbunden ist oder dazu ausgelegt ist, damit verbunden zu werden, umfassend Füße (24a-24b; 24'a-24'b), die ausgelegt sind, um auf beiden Seiten eines Vorsprungs des festen Arms zu positioniert zu ein und jeweils eine Öffnung (25a-25b; 25'a-25'b) umfassen, die in der Montageposition gegenüber der Bohrung (11A; 11B) des Vorsprungs für den Durchgang der Schwenkachse (12A; 12B) platziert ist, wobei der Aufsatz (4A; 4B) auch mindestens eine Aufnahme (27a; 27b) umfasst, die eine Element vom Typ Feder (29a-29b; 29'a-29'b) aufnimmt, das montiert ist, um ein Blockierorgan in eine hohle Zone (8A-9A-10A; 8B-9B-10B) zurückzuschieben, die einer Winkelposition entspricht, um die Blockierung des beweglichen Arms in dieser Position sicherzustellen, wobei das Blockierorgan eine äußere Fläche umfasst, die ihm ermöglicht, auf der halbzylindrischen Wand des Vorsprungs zwischen den hohlen Zonen (8A-9A-10A; 8B-9B-10B) beim Kippen, das vom Bediener auf den beweglichen Arm ausgeübt wird, zu rollen, um es aus einer Winkelposition in eine benachbarte Winkelposition übergehen zu lassen, ein Übergang, im Laufe dessen sich das oder die Elemente vom Typ Feder (29a-29b; 29'a-29'b) zurückziehen, bevor sie ihre Blockierposition wieder einnehmen und das Blockierelement in die benachbarte hohlen Zone zurückschieben,
- wobei der Gelenkkörper (2) die Form eines parallelepipeden Plättchens aufweist und an seinen Enden zwei vorspringende Teile aufweist, wobei der Gelenkkörper (2) in Form eines parallelepipeden Plättchens an mindestens einem Ende durch einen vorspringenden Teil endet, dessen halbzylindrische Fläche (6a; 6b) hohle Zonen (8A-9A-10A; 8B-9B-10B) zur Aufnahme des Blockierorgans des assoziierten beweglichen Arms trägt, wobei der feste Arm zwei Füße (22a; 22b) umfasst, die ausgelegt sind, um sich jeweils auf beiden Seiten des Plättchens zwischen den zwei vorspringenden Endteilen zu platzieren und dort fixiert zu werden, und
**dadurch gekennzeichnet, dass**:
- der Aufsatz (4A; 4B) eines beweglichen Arms eine zylindrische Form aufweist, umfassend entlang seiner Umrandung zwei U-förmige Einbuchtungen (23a; 23b), die die zwei Gelenkfüße (24a, 24b; 24'a, 24'b) des Aufsatzes (4A; 4B) aufnehmen, und der feste Arm einen zylindrischen hohlen Teil, der vom Gelenkkörper (2) durchquert wird, an einem Ende desselben oder in einer Position, die sich entlang desselben befindet, aufweist, wobei der hohle zylindrische Teil des festen Arms in seiner Region, die vom Gelenkkörper (2) durchquert wird, zwei Füße oder Flügel (20a; 20b) bildet, die sich auf beiden Seiten desselben platziert sind und Mittel zur Befestigung an demselben umfassen, wobei die Füße oder Flügel (20a; 20b) von Ausbuchtungen (17a; 17b) des festen Arms gebildet sind, die die Aufnahme des oder der beweglichen Arms/Arme ihn ihren Endpositionen, die gegen den festen Arm umgeklappt sind, ermöglichen.

2. Gelenkanordnung nach Anspruch 1, **dadurch gekennzeichnet, dass** jede halbzylindrische Wand mindestens drei hohle Zonen (8A-9A-10A; 8B-9B-10B) umfasst.

3. Gelenkanordnung nach Anspruch 2, **dadurch gekennzeichnet, dass** die Positionen der drei hohlen Zonen (8A-9A-10A; 8B-9B-10B) ausgewählt sind, um dem beweglichen Arm zu ermöglichen, auf 180° die Positionen bei 0°, bei 90° und bei 180° einzunehmen.

4. Gelenkanordnung nach einem der Ansprüche 1 bis 3, **dadurch gekennzeichnet, dass** die hohlen Zonen (8A-9A-10A; 8B-9B-10B) aus Auskehlungen mit halkreisförmigem Profil bestehen, die mit ihren mittleren Längslinien parallel zur Achse des Vorsprungs angeordnet sind, und durch die Tatsache, dass das Blockierorgan des assoziierten Aufsatzes (4A; 4B) eine äußere Rollfläche aufweist, die zylindrisch ist.

5. Einheit nach Anspruch 4, **dadurch gekennzeichnet, dass** der Aufsatz (4A; 4B) eines beweglichen Arms drei übereinander gelegte Aufnahmen (27a-28-27b) umfasst, wobei die zwei Endaufnahmen (27a-27b) jeweils eine Schraubenfeder (29a, 29b; 29'a, 29'b) aufnehmen, wobei die zentrale Aufnahme (28) ein Blockierorgan aufnimmt, das aus einem zylindrischen Element (30A; 30B) besteht, das von einem Stift (31A; 31B) durchquert wird, dessen Endregionen gegen die Enden der Federn (29a, 29b 29'a, 29'b) in Position in ihren Aufnahmen (27a, 27b) aufliegen, und wo die äußere Fläche die Rollfläche gegen die assoziierte halbzylindrische Wand (6a; 6b) des Vorsprungs des Gelenkkörpers (2) ist und mit dem Boden einer Auskehlung (8A-9A-10A; 8B-9B-10B) zusammenarbeitet.

6. Gelenkanordnung nach einem der Ansprüche 1 bis 5, **dadurch gekennzeichnet, dass** der feste Arm ein Stück (3; 103) umfasst, das aus einem Armabschnitt besteht, der angeordnet ist, um an den Gelenkkörper (2) fixiert zu sein, und/oder dass jeder bewegliche Arm ein Stück (4A, 4B) darstellt, das den Endaufsatz bildet, der angeordnet ist, um mit dem Gelenkkörper (2) zusammenzuarbeiten, wobei jedes dieser Stücke (3; 103; 4A; 4B) Mittel zur Verbindung mit dem Rest des Arms darstellt, der ihm entweder direkt oder mit Hilfe einer Verbindungs- oder Anschlussmuffe assoziiert ist.

7. Gelenkarmanordnung, die ausgelegt ist, um ausgefahren und eingezogen zu werden, umfassend mindestens eine Gelenkanordnung (1), wie in einem der Ansprüche 1 bis 6 definiert, wobei der feste Arm und der beweglichen Arme, die jeweils teleskopisch sein können, Teil der Gelenkarmanordnung sind, wobei die Gelenkarmanordnung das Gerüst einer ein- und ausziehbaren Vorrichtung sein kann, die gegebenenfalls in eine andere Vorrichtung umgewandelt werden kann, wobei das Gerüst zusätzliche Arme und alle zusätzlichen Stücke umfassen kann, um die Vorrichtung zusmmenzusetzen, die z. B. für die Ausübung eines Sports oder für Freizeitbeschäftigung nützlich ist, wie z. B. Tore, Tennis- und Badmintonnetze, Tischtennisplatten, Campingtische, Gartenmöbel, Wandschirme.

8. Gelenkarmeinheit nach Anspruch 7, **dadurch gekennzeichnet, dass** sie vier Gelenkeinheiten (1) umfasst, die in den Winkeln eines Teils des Gerüsts, das ein Rechteck bildet, angeordnet sind.

## Claims

1. A joint assembly (1) allowing to articulate at least one arm, so-called movable arm, around an arm, so-called fixed arm, in a plane perpendicular to the mean longitudinal line of the fixed arm, and to position said movable arm securely into an angular position selected from several predetermined angular positions, comprising:
- a joint body (2) integral with, or able to be made integral with, the fixed arm and comprising at least one part protruding from said fixed arm and delimited by a semi-cylindrical outer wall (6a; 6b) having an axis parallel to the mean line of the fixed arm with the joint body (2) in a position mounted thereon, a bore (11A; 11B) being provided along the axis of said semi-cylindrical wall (6a; 6b) for receiving a pivot pin (12A; 12B), and recessed areas (8A-9A-10A; 8B-9B-10B) being made radially on said semi-cylindrical wall, which correspond to said predetermined angular positions; and
- an end piece (4A; 4B) integral with, or able to be made integral with, a movable arm at one end thereof, comprising tabs (24a-24b; 24'a-24'b) able to be positioned on either side of a protrusion of the fixed arm and each comprising a hole (25a-25b; 25'a-25'b) arranged, in the mounted position, in front of the bore (11A; 11B) of said protrusion for the passage of said pivot pin (12A; 12B), said end piece (4A; 4B) also comprising at least one housing (27a; 27b) receiving a spring-type member (29a-29b; 29'a-29'b) mounted to push back a blocking member in a recessed area (8A-9A-10A; 8B-9B-10B) corresponding to an angular position so as to ensure that the movable arm is blocked in this position, said blocking member comprising an outer surface allowing it to roll on the semi-cylindrical wall of said protrusion between the recessed areas (8A-9A-10A; 8B-9B-10B) when the operator performs a swing on the movable arm for switching it from an angular position to a neighbouring angular position, during which switching the one or more spring-type members (29a-29b; 29'a-29'b) are retracted before returning to their blocking position, pushing back the blocking member in the neighbouring recessed area,
- the joint body (2) being of a parallelepiped-plate shape and comprising, at its ends, two protruding parts, said joint body (2) with a parallelepiped-plate shape ending, at at least one end, by a protruding part whose semi-cylindrical surface (6a; 6b) carries the recessed areas (8A-9A-10A; 8B-9B-10B) for receiving the blocking member for the associated movable arm, the fixed arm comprising two tabs (22a; 22b) intended to be located on either side of the plate between both protruding end parts and be fixed thereto, and
**characterised in that**:
- the end piece (4A; 4B) of a movable arm is of a cylindrical shape, comprising, along its border, two U-shaped notches (23a; 23b) providing both tabs (24a, 24b; 24'a, 24'b) for articulating said end piece (4A; 4B), and the fixed arm has a cylindrical hollow part crossed by the joint body (2) at one end thereof or in a position located along it, the cylindrical hollow part of said fixed arm forming, within its region crossed by the joint body (2), two wings or tabs (20a; 20b) arranged on either side thereof and comprising means for fastening thereto, said wings or tabs (20a; 20b) being formed by notches (17a; 17b) of the fixed arm allowing to receive the one or more movable arms in their extreme positions folded against said fixed arm.

2. The joint assembly according to claim 1, **characterised in that** each semi-cylindrical wall comprises at least three recessed areas (8A-9A-10A; 8B-9B-10B).

3. The joint assembly according to claim 2, **characterised in that** the positions of the three recessed areas (8A-9A-10A; 8B-9B-10B) are selected to allow the movable arm to adopt, on 180°, the positions at 0°, 90° and 180°.

4. The joint assembly according to one of claims 1 to 3, **characterised in that** the recessed areas (8A-9A-10A; 8B-9B-10B) are constituted by grooves with semicircular profile, disposed with their mean longitudinal lines parallel to the axis of the protrusion, and **in that** the blocking member for the associated end piece (4A; 4B) has a rolling outer surface which is cylindrical.

5. The joint assembly according to claim 4, **characterised in that** the end piece (4A; 4B) of a movable arm comprises three housings (27a-28-27b) on top of each other, the two end housings (27a-27b) each receiving a helical spring (29a, 29b; 29'a, 29'b), the middle housing (28) receiving a blocking member constituted by a cylindrical member (30A; 30B) which is crossed by a rod (31A; 31B) whose end regions bear against the ends of the springs (29a, 29b; 29'a, 29'b) in position within their housings (27a, 27b) and whose outer surface is the surface for rolling against the associated semi-cylindrical wall (6a; 6b) of the protrusion of the joint body (2) and cooperates with the bottom of a groove (8A-9A-10A; 8B-9B-10B).

6. The joint assembly according to one of claims 1 to 5, **characterised in that** the fixed arm comprises a member (3; 103) constituting an arm section arranged to be fixed to the joint body (2) and/or each movable arm has a member (4A; 4B) forming the end piece arranged to cooperate with the joint body (2), each of these members (3; 103; 4A; 4B) having means for connecting with the rest of the arm associated therewith, either directly or via a connection or junction sleeve.

7. An articulated-arm assembly, able to be deployed and folded, comprising at least one joint assembly (1) as defined in one of claims 1 to 6, the fixed arm and the movable arms, wherein each one can be telescopic, forming part of said articulated-arm assembly, wherein said articulated-arm assembly can constitute the frame of a device that can be folded and folded-out, when appropriate convertible into another device, wherein the frame could comprise additional arms and any accessories to constitute said device, useful for example to practice sports or hobbies, such as goals, tennis and badminton nets, ping-pong tables, camping tables, garden furniture, screens.

8. The articulated-arm assembly according to claim 7, **characterised in that** it comprises four joint assemblies (1), which are disposed at the corners of a frame part forming a rectangle.
